(19) Europäisches Patentamt
European Patent Office
Office européen des brevets

(11) **EP 2 458 720 B1**

(12) **FASCICULE DE BREVET EUROPEEN**

(45) Date de publication et mention
de la délivrance du brevet:
**19.03.2014 Bulletin 2014/12**

(51) Int Cl.:
***H02M 1/16*** *(2006.01)*   ***H02M 7/217*** *(2006.01)*

(21) Numéro de dépôt: **11186190.2**

(22) Date de dépôt: **21.10.2011**

(54) **Convertisseur de puissance doté d'une source de courant commandée et connecté en monophasé**

Spannungswandler mit einer gesteuerten Stromquelle und verbunden in Einzel-Phasen-Modus

Power converter with a controlled current source and connected in single-phase mode

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.11.2010 FR 1059732**

(43) Date de publication de la demande:
**30.05.2012 Bulletin 2012/22**

(73) Titulaire: **Schneider Toshiba Inverter Europe SAS 27120 Pacy sur Eure (FR)**

(72) Inventeurs:
• **Boulharts, Hocine
78510 Triel sur Seine (FR)**

• **Videt, Arnaud
59655 Villeneuve d'Ascq (FR)**

(74) Mandataire: **Bié, Nicolas et al
Schneider Electric Industries SAS
Service Propriété Industrielle
35 rue Joseph Monier - CS 30323
92506 Rueil-Malmaison Cedex (FR)**

(56) Documents cités:
**EP-A2- 1 919 064       WO-A1-2009/147186
US-A1- 2008 284 385**

**Description**

L'invention concerne un convertisseur de puissance connecté en monophasé. L'invention s'applique plus particulièrement à un convertisseur de puissance doté d'une source de courant commandée.

De manière connue, un convertisseur de puissance comporte plusieurs phases d'entrée connectées au réseau, par exemple trois phases d'entrée s'il est connecté en triphasé ou deux phases d'entrée s'il est connecté en monophasé. Connecté à ses phases d'entrée, un convertisseur de puissance comporte un étage redresseur permettant de transformer la tension alternative fournie par le réseau en une tension redressée. Le convertisseur comporte également un bus d'alimentation de puissance doté d'une première ligne d'alimentation à potentiel positif et d'une deuxième ligne d'alimentation à potentiel négatif sur lesquelles est appliquée la tension redressée et un condensateur de bus connecté entre la première ligne d'alimentation et la deuxième ligne d'alimentation et destiné à maintenir constante la tension continue sur le bus.

Il est connu de placer une source de courant commandée en série sur la première ligne ou la deuxième ligne d'alimentation du bus continu, en amont du condensateur de bus. Cette source de courant comporte par exemple une inductance et un convertisseur électronique connectés en série, ledit convertisseur électronique comportant deux bras de commutation parallèles et un condensateur. Les bras de commutation du convertisseur électronique sont commandés pour moduler la tension aux bornes du condensateur du convertisseur électronique afin d'obtenir à chaque instant une tension déterminée aux bornes du convertisseur électronique, permettant ainsi de contrôler le courant en sortie de l'étage redresseur, dit courant redresseur, et d'agir sur le courant d'entrée fourni par le réseau.

Le document WO 2009/147186 divulgue un convertisseur de puissance selon le préambule de la revendication 1.

Lorsqu'un tel convertisseur de puissance est connecté sur le réseau en triphasé, son convertisseur électronique est commandé en modulation dans un mode de fonctionnement dit continu s'appliquant à l'étage redresseur et dans lequel la tension aux bornes du condensateur du convertisseur doit toujours répondre à la condition suivante :

$$V_c \geq \max |V_r(t) - V_{bus}(t)| \text{ avec } V_r(t) = V_{red}(t)) \text{ et } < V_{bus} >=< V_{red} >,$$

dans laquelle :

- $V_r(t)$ est la tension redressée théorique du réseau. Lorsque l'étage redresseur est en conduction, la tension $V_r$ est confondue avec la tension redressée réelle $V_{red}$.

- <Vbus> est la tension moyenne du bus et <Vred> la tension moyenne en sortie de l'étage redresseur.

Ainsi, il est possible de garantir un courant redresseur constant. Dans ce mode de fonctionnement, la tension du bus continu d'alimentation sera de 95,5% de la tension crête appliquée en sortie de l'étage redresseur.

En revanche, lorsque ce convertisseur de puissance est connecté sur le réseau en monophasé, ce mode de fonctionnement continu n'est pas applicable car la tension du bus continu d'alimentation est alors de 63,7% de la tension crête du réseau. Or ce niveau de tension ne permet pas de commander un moteur.

Le but de l'invention est donc de proposer un procédé de commande d'un convertisseur de puissance connecté au réseau en monophasé et comportant une source de courant commandée telle que décrite ci-dessus.

Ce but est atteint par un convertisseur de puissance comportant :

- un étage redresseur connecté à plusieurs phases d'entrée d'un réseau délivrant un courant d'entrée et sur lequel est appliquée une tension redressée et en sortie duquel est obtenu un courant, dit courant redresseur,

- un bus continu d'alimentation connecté à l'étage redresseur et comportant une première ligne d'alimentation et une deuxième ligne d'alimentation sur chacune desquelles est appliqué un potentiel électrique en vue d'obtenir une tension sur le bus continu d'alimentation,

- un condensateur de bus connecté à la première ligne d'alimentation et à la deuxième ligne d'alimentation,

- une source de courant commandée située sur la première ligne d'alimentation ou la deuxième ligne d'alimentation, en amont du condensateur de bus, ladite source de courant commandée comportant une inductance et un convertisseur électronique comportant un condensateur et deux bras de commutation,

- des moyens de commande des deux bras de commutation du convertisseur électronique pour moduler une tension aux bornes du condensateur afin d'obtenir à chaque instant une tension déterminée aux bornes du convertisseur électronique,

- les moyens de commande étant agencés pour obtenir un mode de fonctionnement discontinu de l'étage redresseur par alternance d'une phase de modulation des bras de commutation avec une phase de saturation dans laquelle les deux bras de commutation sont maintenus simultanément en conduction, ladite phase de saturation étant appliquée pendant une durée déterminée de manière à maintenir la tension aux bornes du condensateur du convertisseur électronique inférieure à la valeur absolue maximale de la différence entre la tension redressée et la tension appliquée sur le bus continu d'alimentation et à augmenter la valeur moyenne de la tension appliquée sur le bus continu d'alimentation.

Selon une particularité, les moyens de commande sont agencés pour mettre en oeuvre une boucle de régulation destinée à déterminer une commande des bras de commutation du convertisseur électronique.

Selon une autre particularité, la durée de la phase de saturation est déterminée à partir des relations suivantes :

$$\theta = \frac{I_L}{I_{redm}} \cdot \frac{\pi}{2 \cdot n} \ \text{et} \ \beta = \pi/n - 2\theta$$

dans lesquelles $\theta$ représente la durée de la phase de modulation, $\beta$ représente la durée de la phase de saturation, n correspond au nombre de phases d'entrée auxquelles est connecté le convertisseur de puissance, $I_L$ est le courant circulant sur le bus continu d'alimentation, en aval du condensateur de bus, $I_{redm}$ correspond au courant redresseur crête.

Selon une autre particularité, le mode de fonctionnement discontinu est obtenu lorsque $\theta < \frac{\pi}{2 \cdot n}$.

L'invention concerne également un variateur de vitesse comportant un étage onduleur muni de bras de commutation destinés à convertir une tension continue en une tension variable destinée à alimenter une charge électrique, ce variateur comportant en amont de son étage onduleur, un convertisseur de puissance tel que défini ci-dessus.

D'autres caractéristiques et avantages vont apparaître dans la description détaillée qui suit en se référant à un mode de réalisation donné à titre d'exemple et représenté par les dessins annexés sur lesquels :

- la figure 1 représente un convertisseur de puissance conforme à l'invention,

- la figure 2 illustre, par différentes courbes, le principe de fonctionnement de l'invention,

- la figure 3 représente un synoptique d'une boucle de régulation adaptée à un convertisseur de puissance connecté en monophasé,

- la figure 4 représente un synoptique d'une boucle de régulation adaptée à un convertisseur de puissance connecté en triphasé.

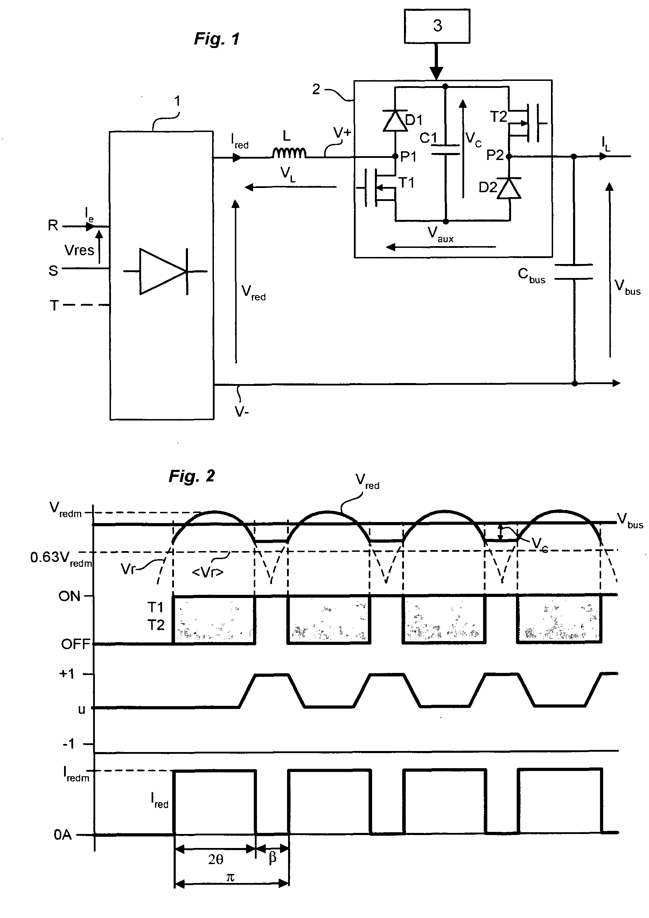

En référence à la figure 1, de manière connue, un convertisseur de puissance comporte un étage redresseur 1 et un bus continu d'alimentation. En référence à la figure 1, l'étage redresseur 1 est connecté au réseau, par exemple via des inductances AC sur deux ou trois phases d'entrée R, S, T (la phase T est représentée en pointillés pour illustrer la connexion en triphasé ou en monophasé du convertisseur). Sur cette figure 1, l'étage redresseur 1 est par exemple un pont de diodes qui permet de redresser la tension alternative $V_{res}$ fournie par le réseau et d'appliquer la tension $V_r$ redressée sur le bus continu d'alimentation. Plus précisément, l'étage redresseur 1 comporte plusieurs bras composés chacun de deux diodes en série, chaque bras étant connecté à une phase d'entrée R, S, T par le point milieu situé entre les deux diodes.

Le bus continu d'alimentation de puissance est connecté en aval de l'étage redresseur 1. Il comporte une ligne d'alimentation à potentiel positif V+ et une ligne d'alimentation à potentiel négatif V-. Au moins un condensateur de bus $C_{bus}$ est connecté à chacune des deux lignes d'alimentation du bus et permet de maintenir la tension du bus à une valeur constante.

Ce convertisseur de puissance peut par exemple être inclus dans un variateur de vitesse comportant un étage onduleur (non représenté) connecté à son bus continu d'alimentation et doté de plusieurs bras de commutation commandés permettant de hacher la tension continue et d'obtenir une tension variable destinée à alimenter une charge électrique.

Dans la suite de la description on distingue la tension redressée réelle désignée $V_{red}$ qui est la tension appliquée réellement en sortie de l'étage redresseur 1 et une tension redressée fictive désignée $V_r$ qui correspond à la tension qui serait appliquée en sortie de l'étage redresseur 1 si l'étage redresseur 1 fonctionnait toujours en conduction continue. La tension $V_r$ étant fictive, elle n'est pas représentée sur la figure 1.

Selon l'invention, le convertisseur de puissance emploie une source de courant commandée connectée en série sur la première ou la deuxième ligne d'alimentation du bus continu d'alimentation, en amont du condensateur de bus. Cette source de courant commandée est destinée à contrôler le courant $I_{red}$ circulant sur le bus continu d'alimentation en sortie de l'étage redresseur 1, ce courant $I_{red}$ étant désigné ci-après courant redresseur.

Cette source de courant commandée prend par exemple la forme d'une inductance électronique commandée comportant :

- une inductance DC (L) de faible valeur,

- une source de tension variable commandée prenant la forme d'un convertisseur électronique 2 composé de deux bras de commutation distincts en parallèle et d'un condensateur C1 connecté en parallèle des deux bras de commutation.

L'étage redresseur 1 du convertisseur de puissance étant non-réversible, les bras de commutation du convertisseur électronique peuvent être unidirectionnels en courant et comportent par exemple chacun un interrupteur électronique T1, T2 connecté en série avec une diode D1, D2. Chaque bras de commutation comporte un point milieu de connexion P1, P2 situé entre son interrupteur électronique T1, T2 et sa diode D1, D2. Le point milieu de connexion P1 du premier bras de commutation est connecté à l'inductance L et le point milieu de connexion P2 du deuxième bras de commutation est connecté au condensateur de bus $C_{bus}$. Sur un bras de commutation du convertisseur électronique 2, l'agencement en série de l'interrupteur électronique et de la diode est décalé par rapport à celui de l'autre bras de commutation.

Les interrupteurs électroniques T1, T2 employés dans le convertisseur électronique 2 sont par exemple des transistors de type MOSFET commandés par des moyens de commande 3 adaptés, employant par exemple une commande MLI (Modulation de largeur d'impulsion). D'autres composants aptes à remplir la même fonction peuvent bien entendu être employés. La commande des deux interrupteurs par MLI consiste à comparer deux signaux en forme de dent de scie synchronisés et en opposition de phase avec un signal de commande constant (communément appelé modulante) en vue de déduire les instants et durées de commutation de chacun des interrupteurs du convertisseur électronique. Pour simplifier, comme représenté sur la figure 2, on peut définir que la commande u résultante varie entre -1 et +1 selon l'état de chacun des deux interrupteurs T1, T2, ce qui permet d'obtenir une valeur de tension $V_{aux}$ aux bornes du convertisseur électronique 2 comprise dans l'intervalle [$-V_c$, $V_c$].

Le convertisseur électronique 2 se comporte ainsi comme une source de tension variable commandée permettant de moduler la tension $V_c$ aux bornes du condensateur C1 du convertisseur électronique 2 et ainsi d'obtenir la tension $V_{aux}$ aux bornes de ce convertisseur électronique 2.

On obtient ainsi la relation suivante entre la tension $V_{bus}$ du bus continu d'alimentation, la tension $V_L$ aux bornes de l'inductance L, la tension $V_{aux}$ aux bornes du convertisseur électronique 2 commandé et la tension $V_{red}$ de l'étage redresseur 1 :

$$V_L = V_{red} - V_{bus} - V_{aux} \qquad (1)$$

En contrôlant la tension $V_{aux}$ aux bornes du convertisseur électronique 2, il est ainsi possible de faire varier la tension $V_L$ et ainsi de contrôler le courant redresseur $I_{red}$ et de lui imposer un profil particulier. Pour obtenir un courant redresseur $I_{red}$ continu, le convertisseur électronique 2 est commandé dans un mode de fonctionnement dit continu s'appliquant à l'étage redresseur et dans lequel la tension $V_c$ aux bornes du condensateur C1 doit toujours répondre à la condition suivante :

$$V_C \geq \left| V_{red}(t) - V_{bus}(t) \right| \text{ avec } <V_{bus}> = <V_{red}> \qquad (2)$$

$<V_{bus}>$ définissant la tension moyenne du bus continu d'alimentation et $<V_{red}>$ la tension redressée moyenne.

Cependant, ce mode de fonctionnement, dit continu, n'est pas adapté pour faire fonctionner le convertisseur de puissance lorsque celui-ci est connecté en monophasé car la tension $V_{bus}$ du bus continu d'alimentation obtenue est insuffisante pour commander la charge. Bien entendu, la connexion en monophasé peut être prévue initialement ou résulter de la perte d'une phase, par exemple par la casse d'une diode de l'étage redresseur 1.

Lorsque le convertisseur de puissance est connecté sur le réseau électrique en monophasé, il est ainsi nécessaire de le faire fonctionner dans un mode de fonctionnement discontinu dans lequel la tension $V_c$ aux bornes du condensateur C1 du convertisseur électronique 2 ne vérifie plus la condition ci-dessus, c'est-à-dire que :

$$V_C < \max \left| V_r(t) - V_{bus}(t) \right| \qquad (3)$$

$V_r(t)$ est alors la tension redressée théorique du réseau. Lorsque l'étage redresseur 1 est en conduction, la tension $V_r$ est confondue avec la tension redressée réelle $V_{red}$ (figure 2). Lorsque l'étage redresseur 1 bloque le passage du courant redresseur, la tension $V_r$ n'est plus confondue avec la tension redressée réelle $V_{red}$.

Selon l'invention, pour forcer ce mode de fonctionnement discontinu, il est nécessaire d'introduire une saturation de la commande u des interrupteurs T1, T2 du convertisseur électronique 2. Ainsi, comme représenté sur la figure 2, le convertisseur électronique 2 est alors commandé en alternant une modulation de la commande u des interrupteurs T1, T2 du convertisseur électronique 2 avec une saturation de cette commande u.

De manière connue, la commande u du convertisseur électronique est modulée lorsque les interrupteurs électroniques T1, T2 du convertisseur varient entre l'état fermé (ON) et l'état ouvert (OFF). La commande u est alors située entre -1 et +1. La commande u du convertisseur électronique est saturée lorsque les interrupteurs électroniques T1, T2 du convertisseur sont bloqués à l'état fermé (ON) ou bloqués à l'état ouvert (OFF). La commande u est alors maintenue à -1 ou à +1. Dans la suite de la description, on s'intéressera plus particulièrement au cas où les interrupteurs sont bloqués à l'état fermé (ON).

Supposons par exemple que les interrupteurs T1, T2 du convertisseur électronique sont bloqués à l'état fermé (ON) durant un temps judicieusement déterminé, la tension $V_{aux}$ aux bornes du convertisseur électronique 2 sera alors égale à $-V_c$. Comme représenté sur la figure 2, sur la durée de saturation, la valeur moyenne de la tension $V_c$ s'ajoute à la tension redressée $V_{red}$ pour former la tension $V_{bus}$ du bus continu d'alimentation. Il en résulte une augmentation globale de la tension $V_{bus}$ du bus continu d'alimentation qui devient supérieure à 93% de la tension crête du réseau. Sur la durée de saturation, comme la tension $V_{bus}$ du bus continu d'alimentation est supérieure à la tension redressée $V_{red}$, cela entraîne un blocage de l'étage redresseur 1 et donc une annulation du courant redresseur ($I_{red}$=0A). Sur la figure 2, on peut voir que lors de chaque saturation de la commande u, le courant redresseur $I_{red}$ s'annule et que l'introduction d'une saturation et donc le passage en mode de fonctionnement discontinu permet une augmentation de la tension $V_{bus}$ qui devient supérieure à la tension moyenne <Vr> (représentée en pointillés sur la figure 2).

Au cours d'une période de la tension redressée du réseau, le temps de modulation et le temps de saturation de la commande sont déterminés par les moyens de commande 3 du convertisseur électronique 2 de manière à être en mode de fonctionnement discontinu.

En référence à la figure 2, on définit les paramètres suivants :

- le temps de modulation est défini à partir d'un angle de modulation $\theta$ et vaut $2\theta$,

- le temps de saturation est défini à partir d'un angle de saturation $\beta$ et vaut $\beta$ ,

- La période de découpage est définie par l'angle de période valant $\pi/n$ (n=3 pour un réseau triphasé et n=1 pour un réseau monophasé). La période $\pi/n$, l'angle de modulation $\theta$ et l'angle de saturation $\beta$ sont reliés par l'expression $\beta = \pi/n - 2\theta$ .

L'angle de modulation $\theta$ détermine les valeurs de la tension $V_c$ aux bornes du condensateur C1 du convertisseur électronique 2 et de la tension $V_{bus}$ du bus continu d'alimentation selon les relations suivantes :

$$V_{bus} = V_{redm} \cdot \frac{\sin \theta}{\theta} \qquad (4)$$

$$V_C = V_{redm} \cdot (\frac{\sin \theta}{\theta} - \cos \theta) \qquad (5)$$

Dans lesquelles $V_{redm}$ correspond à la tension redressée crête qui est égale à la tension réseau crête $V_{resm}$.

Le courant redresseur crête $I_{redm}$ définit l'angle de modulation $\theta$ en fonction du courant de charge $I_L$ destiné à alimenter la charge électrique selon la relation suivante :

$$\theta = \frac{I_L}{I_{redm}} \cdot \frac{\pi}{2 \cdot n} \qquad (6)$$

De cette relation on déduit que si $\theta < \dfrac{\pi}{2 \cdot n}$ , le courant de charge $I_L$ est toujours inférieur au courant redresseur crête $I_{rm}$, entraînant ainsi nécessairement un mode de fonctionnement discontinu.

Pour un réseau monophasé n =1 $\Rightarrow \theta < \pi / 2$

Le contrôle de l'angle de modulation $\theta$ est imposé par l'une des trois variables du système, c'est-à-dire :

- le courant redresseur crête $I_{redm}$,

- la tension $V_c$ aux bornes du condensateur C1,

- la tension $V_{bus}$ du bus continu d'alimentation,

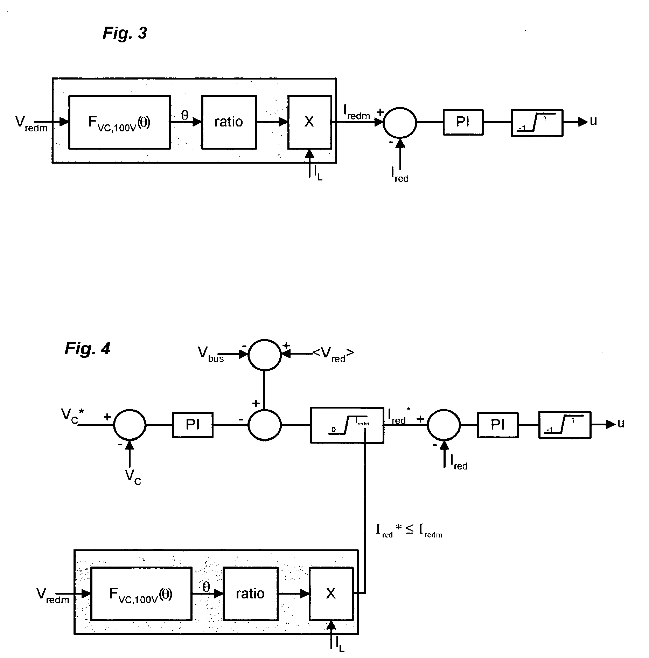

Le principe du contrôle est donc d'obtenir la saturation de la commande u. Différentes architectures de régulateur peuvent être employées pour parvenir à cet objectif. La figure 3 montre un exemple d'architecture permettant de remplir cet objectif.

La figure 3 montre une boucle de régulation PI (Proportionnel-Intégral) du courant redresseur $I_{red}$. Cette boucle de régulation est adaptée pour le fonctionnement d'un convertisseur de puissance connecté en monophasé.

Dans cette boucle de régulation :

- la tension redressée crête $V_{redm}$ est appliquée en entrée et permet de déterminer l'angle de modulation selon la formule (5) :

$$V_C = V_{redm} \cdot (\frac{\sin \theta}{\theta} - \cos \theta) ,$$

la tension VC aux bornes du condensateur C1 n'étant pas par exemple supérieure à 100Volts,

- à partir de l'angle de modulation $\theta$ et d'une mesure ou d'une détermination du courant de charge $I_L$, on en déduit le courant redresseur crête $I_{redm}$ à partir de la relation (6) : $Irm = I_L \cdot \dfrac{\pi}{2 \cdot \theta}$. L'angle de modulation $\theta$ est bien entendu imposé pour que le courant redresseur crête $I_{redm}$ soit supérieur au courant de charge $I_L$ de manière à saturer la commande u et donc à obtenir un mode de fonctionnement discontinu.

Cette boucle de régulation peut être implantée dans une boucle de régulation plus large adaptée au fonctionnement d'un convertisseur de puissance connecté en triphasé comme représenté sur la figure 4. Sur cette figure 4, la boucle de régulation décrite ci-dessus permet de déterminer le courant redresseur crête $I_{redm}$. La deuxième boucle de régulation permet de déterminer la consigne du courant redresseur $I_{red}^*$ à l'aide d'un régulateur PI appliqué à la tension $V_c$ aux bornes du condensateur C1 du convertisseur électronique 2. La consigne $V_c^*$ de la tension aux bornes du condensateur C1 est fixée de telle sorte que le courant redresseur $I_{red}$ soit de conduction continue tant que le convertisseur de puissance est connecté en triphasé. La relation (2) ci-dessus sera ainsi toujours vérifiée.

En revanche, si une perte de phase se produit, la tension $V_c$ augmente alors au-delà de la consigne $V_c^*$ et sature le régulateur PI. La consigne de courant redresseur $I_{red}^*$ est alors limitée au courant redresseur crête $I_{redm}$. On se ramène ensuite au cas du contrôle du convertisseur connecté en monophasé.

Il est bien entendu que l'on peut, sans sortir du cadre de l'invention, imaginer d'autres variantes et perfectionnements de détail et de même envisager l'emploi de moyens équivalents tels que définis par les revendications en annexe.

## Revendications

1. Convertisseur de puissance comportant :

   - un étage redresseur (1) connecté à plusieurs phases d'entrée d'un réseau délivrant un courant d'entrée ($I_e$) et sur lequel est appliquée une tension redressée ($V_r$) et en sortie duquel est obtenu un courant, dit courant redresseur,
   - un bus continu d'alimentation connecté à l'étage redresseur (1) et comportant une première ligne d'alimentation (V+) et une deuxième ligne d'alimentation (V-) sur chacune desquelles est appliqué un potentiel électrique en vue d'obtenir une tension sur le bus continu d'alimentation ($V_{bus}$),
   - un condensateur de bus ($C_{bus}$) connecté à la première ligne d'alimentation et à la deuxième ligne d'alimentation,
   - une source de courant commandée située sur la première ligne d'alimentation ou la deuxième ligne d'alimentation, en amont du condensateur de bus ($C_{bus}$), ladite source de courant commandée comportant une inductance (L) et un convertisseur électronique (2) comportant un condensateur (C1) et deux bras de commutation,
   - des moyens de commande (3) des deux bras de commutation du convertisseur électronique (2) pour moduler une tension ($V_c$) aux bornes du condensateur (C1) afin d'obtenir à chaque instant une tension ($V_{aux}$) déterminée aux bornes du convertisseur électronique (2),
   - **caractérisé en ce que** les moyens de commande (3) sont agencés pour obtenir un mode de fonctionnement discontinu de l'étage redresseur (1) par alternance d'une phase de modulation des bras de commutation avec une phase de saturation dans laquelle les deux bras de commutation sont maintenus simultanément en conduction, ladite phase de saturation étant appliquée pendant une durée déterminée ($\beta$) de manière à maintenir la tension ($V_c$) aux bornes du condensateur (C1) du convertisseur électronique (2) inférieure à la valeur absolue maximale de la différence entre la tension redressée ($V_r$) et la tension ($V_{bus}$) appliquée sur le bus continu d'alimentation et à augmenter la valeur moyenne de la tension ($V_{bus}$) appliquée sur le bus continu d'alimentation.

2. Convertisseur de puissance selon la revendication 1, **caractérisé en ce que** les moyens de commande (3) sont agencés pour mettre en oeuvre une boucle de régulation destinée à déterminer une commande des bras de commutation du convertisseur électronique (2).

3. Convertisseur de puissance selon la revendication 1 ou 2, **caractérisé en ce que** la durée ($\beta$) de la phase de saturation est déterminée à partir des relations suivantes :

$$\theta = \frac{I_L}{I_{redm}} \cdot \frac{\pi}{2 \cdot n} \text{ et } \beta = \pi/n - 2\theta$$

dans lesquelles $\theta$ représente la durée de la phase de modulation, $\beta$ représente la durée de la phase de saturation, n correspond au nombre de phases d'entrée auxquelles est connecté le convertisseur de puissance, $I_L$ est le courant circulant sur le bus continu d'alimentation, en aval du condensateur de bus, $I_{redm}$ correspond au courant redresseur crête.

4. Convertisseur de puissance selon la revendication 3, **caractérisé en ce que** le mode de fonctionnement discontinu est obtenu lorsque $\theta < \frac{\pi}{2 \cdot n}$.

**5.** Variateur de vitesse comportant un étage onduleur muni de bras de commutation destinés à convertir une tension continue en une tension variable destinée à alimenter une charge électrique, **caractérisé en ce qu'**il comporte, en amont de son étage onduleur, un convertisseur de puissance tel que défini dans l'une des revendications 1 à 4.

**Patentansprüche**

**1.** Leistungswandler, der aufweist:

- eine mit mehreren Eingangsphasen eines einen Eingangsstrom ($I_e$) liefernden Netzes verbundene Gleichrichterstufe (1), an die eine gleichgerichtete Spannung ($V_r$) angelegt wird und an deren Ausgang ein Gleichrichterstrom genannter Strom erhalten wird,
- eine Versorgungs-Gleichstromsammelschiene, die mit der Gleichrichterstufe (1) verbunden ist und eine erste Versorgungsleitung (V+) und eine zweite Versorgungsleitung (V-) aufweist, an jede von denen ein elektrisches Potential angelegt wird, um eine Spannung in der Versorgungs-Gleichstromsammelschiene ($V_{bus}$) zu erhalten,
- einen Buskondensator ($C_{bus}$), der mit der ersten Versorgungsleitung und der zweiten Versorgungsleitung verbunden ist,
- eine gesteuerte Stromquelle, die sich auf der ersten Versorgungsleitung oder der zweiten Versorgungsleitung vor dem Buskondensator ($C_{bus}$) befindet, wobei die gesteuerte Stromquelle eine Induktivität (L) und einen elektronischen Wandler (2) aufweist, der einen Kondensator (C1) und zwei Schaltarme aufweist,
- Steuereinrichtungen (3) der zwei Schaltarme des elektronischen Wandlers (2), um eine Spannung ($V_c$) an den Klemmen des Kondensators (C1) zu modulieren, um zu jedem Zeitpunkt eine bestimmte Spannung ($V_{aux}$) an den Klemmen des elektronischen Wandlers (2) zu erhalten, **dadurch gekennzeichnet, dass** die Steuereinrichtungen (3) eingerichtet sind, um eine diskontinuierliche Betriebsart der Gleichrichterstufe (1) durch Abwechseln einer Modulationsphase der Schaltarme mit einer Sättigungsphase zu erhalten, in der die zwei Schaltarme gleichzeitig leitend gehalten werden, wobei die Sättigungsphase während einer bestimmten Dauer ($\beta$) angewendet wird, um die Spannung ($V_c$) an den Klemmen des Kondensators (C1) des elektronischen Wandlers (2) unter dem maximalen Absolutwert der Differenz zwischen der gleichgerichteten Spannung ($V_r$) und der an die Versorgungs-Gleichstromsammelschiene angelegten Spannung ($V_{bus}$) zu halten, und um den Mittelwert der an die Versorgungs-Gleichstromsammelschiene angelegten Spannung ($V_{bus}$) zu erhöhen.

**2.** Leistungswandler nach Anspruch 1, **dadurch gekennzeichnet, dass** die Steuereinrichtungen (3) eingerichtet sind, um eine Regelschleife anzuwenden, die dazu bestimmt ist, eine Steuerung der Schaltarme des elektronischen Wandlers (2) zu bestimmen.

**3.** Leistungswandler nach Anspruch 1 oder 2, **dadurch gekennzeichnet, dass** die Dauer ($\beta$) der Sättigungsphase ausgehend von den folgenden Beziehungen bestimmt wird:

$$\theta = \frac{I_L}{I_{redm}}.\frac{\pi}{2.n} \quad \text{und} \quad \beta = \pi/n - 2\theta$$

wobei $\theta$ die Dauer der Modulationsphase darstellt, $\beta$ die Dauer der Sättigungsphase darstellt, n der Anzahl von Eingangsphasen entspricht, mit denen der Leistungswandler verbunden ist, $I_L$ der in der Versorgungs-Gleichstromsammelschiene hinter dem Buskondensator fließende Strom ist, $I_{redm}$ dem Spitzengleicherichterstrom entspricht.

**4.** Leistungswandler nach Anspruch 3, **dadurch gekennzeichnet, dass** die diskontinuierliche Betriebsart erhalten wird, wenn gilt $\theta < \frac{\pi}{2.n}$ .

**5.** Drehzahlregler, der eine Wechselrichterstufe aufweist, die mit Schaltarmen versehen ist, welche dazu bestimmt sind, eine Gleichspannung in eine Wechselspannung umzuwandeln, die dazu bestimmt ist, eine elektrische Last zu speisen, **dadurch gekennzeichnet, dass** er vor seiner Wechselrichterstufe einen Leistungswandler wie in einem der Ansprüche 1 bis 4 definiert aufweist.

**Claims**

1. Power converter comprising

   - a rectifier stage (1) connected to a number of input phases of a network delivering an input current ($I_e$) and to which is applied a rectified voltage ($V_r$) and at the output of which is obtained a current, called rectifier current,
   - a DC power supply bus connected to the rectifier stage (1) and including a first power supply line (V+) and a second power supply line (V-) to each of which is applied an electrical potential in order to obtain a voltage on the DC power supply bus ($V_{bus}$),
   - a bus capacitor ($C_{bus}$) connected to the first power supply line and to the second power supply line,
   - a controlled current source situated on the first power supply line or the second power supply line, upstream of the bus capacitor ($C_{bus}$), said controlled current source including an inductance (L) and an electronic converter (2) including a capacitor (C1) and two switching arms,
   - control means (3) for controlling the two switching arms of the electronic converter (2) to modulate a voltage ($V_c$) at the terminals of the capacitor (C1) in order to obtain, at each instant, a determined voltage ($V_{aux}$) at the terminals of the electronic converter (2),
   - **characterized in that** the control means (3) are arranged to obtain a discontinuous operating mode of the rectifier stage (1) by alternation of a modulation phase of the switching arms with a saturation phase in which the two switching arms are simultaneously kept conducting, said saturation phase being applied for a determined duration (β) so as to keep the voltage ($V_c$) at the terminals of the capacitor (C1) of the electronic converter (2) below the maximum absolute value of the difference between the rectified voltage ($V_r$) and the voltage ($V_{bus}$) applied to the DC power supply bus and to increase the average value of the voltage ($V_{bus}$) applied to the DC power supply bus.

2. Power converter according to Claim 1, **characterized in that** the control means (3) are arranged to implement a regulation loop intended to determine a control of the switching arms of the electronic converter (2).

3. Power converter according to Claim 1 or 2, **characterized in that** the duration (β) of the saturation phase is determined on the basis of the following relationships:

$$\theta = \frac{I_L}{I_{redm}} \cdot \frac{\pi}{2 \cdot n} \quad \text{and} \quad \beta = \pi/n - 2\theta$$

   in which θ represents the duration of the modulation phase, β represents the duration of the saturation phase, n corresponds to the number of input phases to which the power converter is connected, $I_L$ is the current flowing on the DC power supply bus, downstream of the bus capacitor, $I_{redm}$ corresponds to the peak rectifier current.

4. Power converter according to Claim 3, **characterized in that** the discontinuous operating mode is obtained when

$$\theta < \frac{\pi}{2 \cdot n} \ .$$

5. Variable speed drive including an inverter stage provided with switching arms intended to convert a DC voltage into a variable voltage intended to power an electric load, **characterized in that** it includes, upstream of its inverter stage, a power converter as defined in one of Claims 1 to 4.

*Fig. 1*

*Fig. 2*

**Fig. 3**

**Fig. 4**

$$I_{red}^{*} \leq I_{redm}$$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009147186 A